# EUROPÄISCHE PATENTSCHRIFT

(11) **EP 0 800 932 B1**
(45) Veröffentlichungstag und Bekanntmachung des Hinweises auf die Patenterteilung: **23.02.2000**
(21) Anmeldenummer: 96250081.5
(22) Anmeldetag: 12.04.1996
(51) Int. Cl.: B60B 17/00

(54) **Scheibenrad, insbesondere für Schienenfahrzeuge**
Disk wheel, in particular for railway vehicles
Roue à disque, en particulier pour véhicules ferroviaires

(43) Veröffentlichungstag der Anmeldung: 15.10.1997
(73) Patentinhaber: RADSATZFABRIK ILSENBURG GmbH, 38871 Ilsenburg (DE)
(72) Erfinder: Warmuth, Frank, D-13629 Berlin (DE); Gutsche, Christian, Dr., D-14167 Berlin (DE); Schröter, Wolfgang, D-23758 Oldenburg in Holstein (DE); Pingel, Dieter, D-12305 Berlin (DE)
(74) Vertreter: Köhler, Reimund

(56) Entgegenhaltungen:
- DE-A- 3 716 070
- DE-A- 3 814 343
- DE-A- 3 814 344
- DE-A- 3 814 345
- DE-C- 4 336 844
- DE-C- 4 413 308
- GB-A- 1 181 383

## Beschreibung

Die Erfindung betrifft ein Scheibenrad, insbesondere für Schienenfahrzeuge, gemäß dem Oberbegriff des Patentanspruches 1 wie z.B. aus DE-A-3 814 345 bekannt ist. Es sind Scheibenräder aus Metall / Kunststoff-Verbundkonstruktionen bekannt, bei denen die Radscheiben in Faserverbundkunststoff (FVK) - Bauweise aus äußeren FVK-Deckschichten bestehen und der Innenkern ausgeschäumt ist.

So ist ein Scheibenrad nach DE 37 16 070 A1 mit einem Schubübertragungskörper und Deckscheiben aus zwei gleichgebauten Halbschalen bekannt, wobei zwischen Nabe und Laufkranz sektormäßig unterteilende speichenartige Verstärkungsstege vorgesehen sind. Die Verstärkungsstege weisen jeweils einen Längsschlitz auf, in den Stegplatten eingesetzt sind, die die Halbschalen miteinander verbinden. Durch die Teilung der nebeneinander angeordneten Halbschalen ist diese bekannte Ausbildung instabil. Die Grundausstattung Halbschalen als Preßteile aus Gewebe- und Kurzfaserlaminat, bei denen die Hohlräume ausgeschäumt und in denen Stegplatten als Schalenverbindungen vorgesehen sind, wird in der Folge im wesentlichen durch die besondere Ausgestaltung der Verbindungselemente variiert. Nach DE 38 14 345 sind die FVK-Streben mit in Streben-Längsrichtung unidirektionaler Faserrichtung und nach DE 38 14 344 als zur Radachse verkoppelte schräg geneigte Faserverbundstege gekennzeichnet.

Diese bekannten Schienenräder haben gemeinsam den Nachteil, daß das Einbringen von Streben, ganz gleich in welcher Ausbildung, zusätzlichen Aufwand bedeutet und eine Homogenität des Innenkerns nicht zuläßt.

Die Ausbildung eines Schienenrades nach DE 38 14 343 mit einer Radscheibe ebenfalls aus zwei äußeren FVK-Deckschichten und einem zwischen diesen angeordneten leichten Innenkern aus ringsegmentförmigen, schaumstoffgefüllten Faserverbund-Hohlkassetten bringt hinsichtlich der Innenkernausbildung unkomplizierte stabilisierende Vorteile, insgesamt sind aber auch bei dieser Ausbildung die Probleme einer einfachen und berechenbaren Ausbildung der zwischen den äußeren Deckschichten angeordneten Bauteile nicht ausgeräumt. Bei all den genannten Lösungen ist das Problem der Einbindung der äußeren Deckschichten in den Radreifen bzw. in die Radnabe nicht zufriedenstellend gelöst. Der Vorschlag nach DE 37 16 070 A1 bringt aus dieser Sicht Vorteile gegenüber den anderen bekannten Ausführungen.

Gemeinsam haben diese bekannten Ausführungen den gravierenden Nachteil, daß sie nicht rotationssymmetrisch ausgebildete Radkörper sind. Das bringt immer Nachteile u.a. in der Fertigung.

Aufgabe der Erfindung ist es, einen gattungsmäßigen Radkörper in FVK-Bauweise zu schaffen, der eine maximale Krafteinleitung durch eine zuverlässige und tragfähige Verbindung der Scheibendeckschichten mit Verbindungskörpern am Radreifen und an der Radnabe herstellt und die Verbindungskörper durch ihre konstruktive Ausbildung wiederum eine sichere Verbindung von der Radscheibe zu dem Laufkranz und zur Radsatzwelle gewährleistet, wobei der gesamte Radscheibenaufbau rotationssymmetrisch ausgebildet ist.

Die Aufgabe wird erfindungsgemäß durch die Merkmale der Patentansprüche gelöst, das heißt, daß an Radnabe und am Radreifen je ein schalenförmiger Ring zur Scheibenmitte hin geöffnet angeordnet ist, die beidseitig von Scheiben aus Faserverbundwerkstoff formschlüssig gefügt verschlossen werden und einen Hohlraum einschließen, der mit Füllstoffschaum ausgefüllt ist. Die formschlüssigen Verbindungen der schalenförmigen Ringe mit den Scheiben sind ebenbündig ausgebildet, und können an den Übergängen bzw. äußeren und inneren Rändern der Scheiben durch Wülste bzw. zusätzliche Scheiben bzw. Ringe angedrückt werden.

Zwei Ausführungsbeispiele der Erfindung sollen anhand der Zeichnungen näher erläutert werden. Die Zeichnungen zeigen in:
- Fig. 1:: den Schnitt durch das FVK-Schienenlaufrad mit einem inneren schalenförmigen Ring auf einem Nabenkörper,
- Fig. 2:: den Schnitt durch das FVK-Schienenlaufrad mit einem inneren schalenförmigen Nabenring als kompakter Nabenkörper,
- Fig. 3:: Scheibenaufbau nach Fig. 2 mit äußeren Blechen am Nabenkörper.

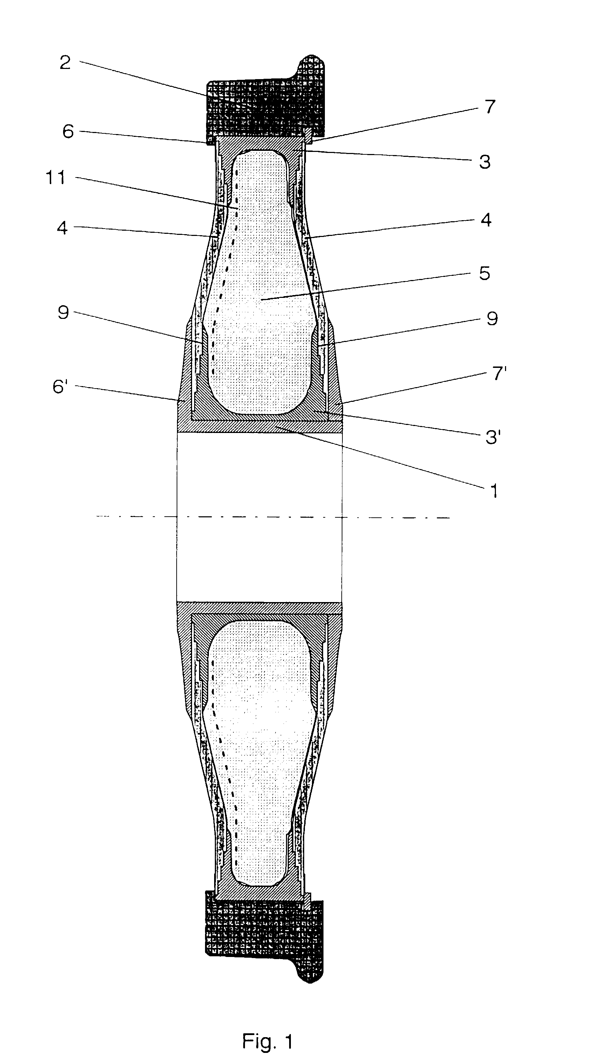

Nach Fig. 1 besteht das Scheibenrad aus zwei schalenförmigen Ringen 3 und 3' und beidseitig angeordneten Scheiben 4. Der schalenförmige Ring 3 liegt am Laufkranz 2 an und der schalenförmige Ring 3' ist auf einem Nabenkörper 1 aufgesetzt. Die Scheiben 4 decken formschlüssig die schalenförmigen Ringe 3 und 3' von außen ab und bilden somit einen Hohlraum 5, der ausgefüllt ist, beispielsweise mit Kunststoffschaum. Der Formschluß zwischen Scheiben 4 und schalenförmigen Ringen 3 und 3' wird in dem Beispiel über geklebte Verbindungen 9 erreicht. Der Nabenkörper 1 besteht aus einer Hülse mit einer einseitigen ringförmigen Wulst 6'. Am Laufkranz 2 liegt das Scheibenrad zwischen einer Wulst 6 und einem Ring 7 und am Nabenkörper 1 zwischen der Wulst 6' und einem Ring 7'. Die Ringe 7 und 7' sind eingesetzte bzw. fest aufgesetzte Teile.

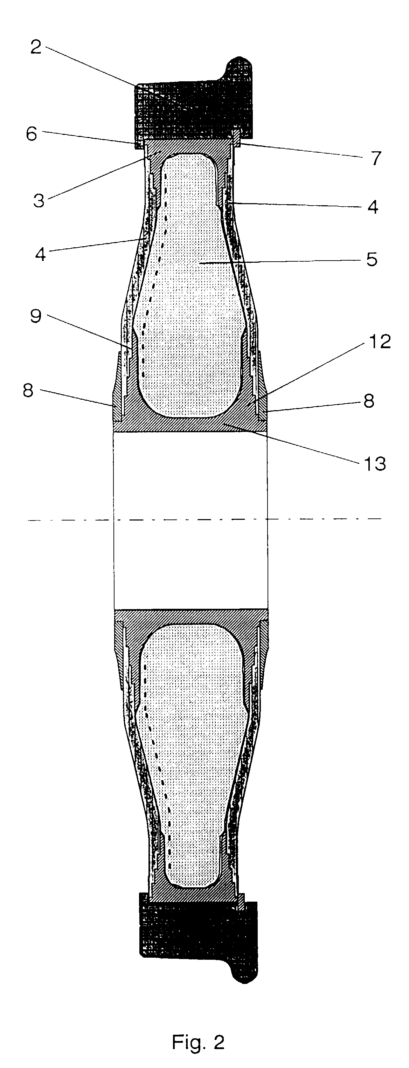

Nach Fig. 2 besteht das Scheibenrad aus dem schalenförmigen Ring 3 und einem schalenförmigen Nabenkörper 13 sowie den beidseitig angeordneten Scheiben 4. Am Laufkranz 2 liegt das Scheibenrad zwischen der Wulst 6 und dem Ring 7 und am Nabenkörper 13 zwischen den am Nabenkörper 13 aufgesetzten wulstartigen Profilringen 8.

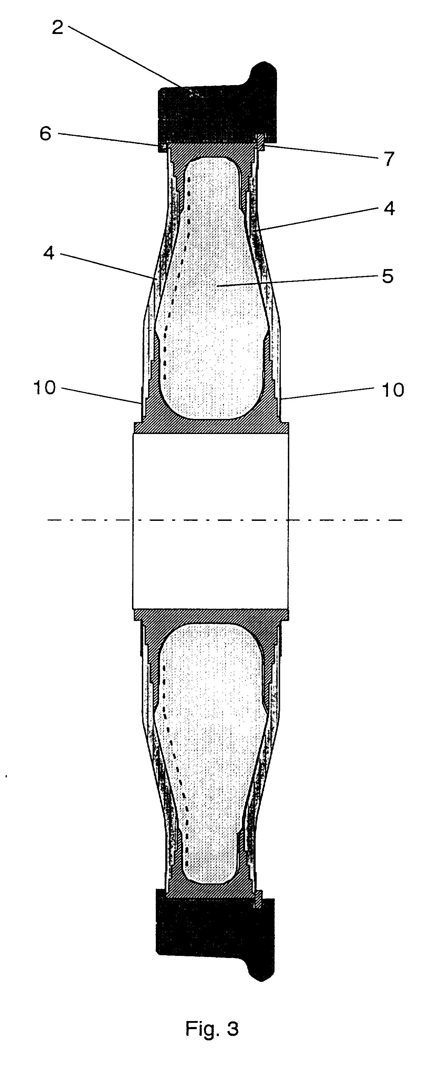

Nach Fig. 3 werden die Scheiben 4 im Bereich des Nabenkörpers 13 durch Bleche 10 zusätzlich angedrückt.

In dem Übergangsbereich des äußeren Randes der Scheibe 4 am schalenförmigen Ring 3 und inneren Randes der Scheibe 4 am schalenförmigen Ring 3' bzw. Nabenkörper 13 sind zum besseren Anliegen die Wulst 6 und der Ring 7 am Laufkranz 2 und beidseitig die Wulst 6' und der Ring 7' bzw. Profilringe 8 oder Bleche 10 vorgesehen. Mit diesen Abdeckungen wird die Scheibe 4 in den Übergangsbereichen zusätzlich angedrückt und abgedeckt und außerdem wird das Eindringen von Feuchtigkeit verhindert. Mit den entsprechend wulstartigen Ausbildungen wird der nötige Anpreßdruck erreicht. Neben der hohen Krafteinleitung hat die vorgeschlagene Lösung durch die rotationssymmetrische Ausbildung des Scheibenrades auch große Vorteile u.a. bei der Herstellung des Rades.

Die in den Figuren dargestellten stufenförmigen Verbindungen 9 können anders ausgebildet, beispielsweise auch wellenförmig sein. Es werden bei allen gewählten Ausführungsformen hohe Anforderungen hinsichtlich Bauteilgenauigkeit und Oberflächenbeschaffenheit der Verbindungen 9 gestellt. Über die gesamte Fügefläche ist in dem Ausführungsbeispiel beim Kleben ein Fügespalt konstant einzuhalten. Dieser Fügespalt hat wesentlichen Einfluß auf das Festigkeitsverhalten der Verbindungen 9. Die Form der Scheiben 4 ist an die besonderen Belastungsverhältnisse des Scheibenrades angepaßt und entsprechend gestaltet. Mit einer Verklebung werden zugleich an den Verbindungsflächen gute Dämpfungseigenschaften und eine gleichförmige Spannungsverteilung im Fügebereich durch flächige Krafteinleitung im Vergleich zu bekannten Laufrädern erreicht. Durch eine stoffschlüssige, flächenhaft kraftübertragende Fügetechnik können unterschiedliche Werkstoffe verbunden werden. Auch ist es im Sinne der Erfindung bei unterschiedlichen Fügetechniken, beispielsweise Nieten in den Verbindungen 9, zusätzliche Dämpfungsmaterialien zwischen den Fügeflächen einzulegen. Eine solche Ausführungsform ist denkbar, jedoch nicht im einzelnen dargestellt. Die Scheiben 4 in den Figuren bestehen vorzugsweise aus mehreren Schichten von Kohlefasern und Glasfasern, die in einer Epoxidharzmatrix gebunden sind. Diese Kombination aus Kohlefasern und Glasfasern ist zur Einhaltung der Steifigkeitsanforderungen notwendig. Zur Herstellung der Scheiben 4 werden Kohlefasern- und Glasfaser-Prepregs eingesetzt. Die schalenförmigen Ringe 3 und 3' bzw. der Nabenkörper 13 bestehen vorzugsweise aus Stahl und der Hohlraum 5 aus Acrylschaum, welcher gute mechanische Eigenschaften mit einer guten Zerspanbarkeit kombiniert. Vor der Montage der Einzelkomponenten der Scheiben 4 muß der Schaumkern segmentiert werden. In dem Schaumkern werden metallische Leiter der Stromrückführungen verlegt.

### Aufstellung der verwendeten Bezugszeichen:

- 1: Nabenkörper
- 2: Laufkranz
- 3, 3': schalenförmige Ringe
- 4: Scheibe
- 5: Hohlraum
- 6, 6': Wulste
- 7, 7': Ringe
- 8: Profilring
- 9: Verbindung
- 10: Blech
- 11: metallische Leiter
- 12: schalenförmiger Nabenring
- 13: Nabenkörper

## Patentansprüche

1. Scheibenrad, insbesondere für Schienenfahrzeuge mit einer Nabe und einem Laufkranz sowie mit einem Scheibenkörper in Faserverbundkunststoffbauweise bestehend aus äußeren Deckschichten und dazwischenliegendem Kunststoff schaumkörper, dadurch gekennzeichnet, daß ein einteiliger schalenförmiger Ring (3) am Laufkranz (2) und ein einteiliger schalenförmiger Ring (3') auf einem Nabenkörper (1) bzw. ein einteiliger schalenförmiger Nabenring (12) als kompakter Nabenkörper (13) direkt auf einer Radsatzwelle angeordnet sind und beidseitig der schalenförmigen Ringe (3 und 3') bzw. des schalenförmigen Ringes (3) mit dem schalenförmigen Nabenring (12) über Scheiben (4) formschlüssig verbunden sind und somit einen Hohlraum (5) einschließen, der mit einem Füllstoff ausgefüllt und der Formschluß über Verbindungen (9) hergestellt ist, wobei die Außenseiten der Scheiben (4) im Bereich der Verbindungen (9) zusätzlich gehalten und abgedeckt werden.

2. Scheibenrad nach Anspruch 1, dadurch gekennzeichnet, daß die formschlüssigen Verbindungen (9) gefügt und beispielsweise stufenförmig ausgebildet sind.

3. Scheibenrad nach Anspruch 1, dadurch gekennzeichnet, daß die Außenseiten der Scheiben (4) im Bereich der Verbindungen (9) durch Wulste (6 und 6') bzw. Wulst (6) und Blech (8) bzw. Wulst (6) und Profilring (10) auf der einen Seite und durch Ringe (7 und 7') bzw. Ring (7) und Blech (8) bzw. Ring (7) und Profilring (10) auf der anderen Seite zusätzlich gehalten und abgedeckt werden.

4. Scheibenrad nach Anspruch 1 und 2, dadurch gekennzeichnet, daß der Nabenkörper (1) und Wulst (6') ein Teil bilden.

## Claims

1. Disc wheel, in particular for rail vehicles, having a hub and a tread as well as a disc body in a fibre-composite-plastic type of construction, consisting of outer protective layers and a plastic foamed body in between, characterized in that a one-piece shell-shaped ring (3) is arranged on the tread (2) and a one-piece shell-shaped ring (3') is arranged on a hub body (1) or a one-piece shell-shaped hub ring (12), as compact hub body (13), is arranged directly on a wheel-set shaft, said shell-shaped rings (3 and 3') or respectively said shell-shaped ring (3) and said shell-shaped hub ring (12) being connected on either side via discs (4) in a positive-locking manner and thus enclosing a cavity (5), which is filled with a filler and the positive locking is produced via connections (9), the outsides of the discs (4) being additionally held and covered in the region of the connections (9).

2. Disc wheel according to Claim 1, characterized in that the positive-locking connections (9) are fitted together and are, for example, of stepped design.

3. Disc wheel according to Claim 1, characterized in that the outsides of the discs (4) in the region of the connections (9) are additionally held and covered by beads (6 and 6') or respectively a bead (6) and a plate (8) or respectively a bead (6) and a profile ring (10) on the one side and by rings (7 and 7') or respectively a ring (7) and a plate (8) or respectively a ring (7) and a profile ring (10) on the other side.

4. Disc wheel according to Claims 1 and 2, characterized in that the hub body (1) and the bead (6') form one part.

## Revendications

1. Roue à disque, en particulier pour véhicules ferroviaires, avec un moyeu et une bande de roulement ainsi qu'un corps en forme de disque en matériau plastique renforcé par des fibres, se composant de couches de revêtement externes et d'un corps en mousse plastique intercalé, caractérisée en ce qu'une couronne d'une seule pièce (3) en forme de coque est disposée sur la bande de roulement (2) et une couronne d'une seule pièce (3') en forme de coque est disposée sur un corps de moyeu (1), ou bien une couronne de moyeu (12) d'une seule pièce en forme de coque en tant que corps de moyeu compact (13) est disposée directement sur un arbre d'essieu monté et celles-ci sont reliées à engagement positif des deux côtés de la couronne en forme de coque (3 et 3'), respectivement de la couronne (3) en forme de coque avec la couronne de moyeu (12) en forme de coque par des disques (4), et ainsi circonscrivent un espace creux (5), qui est rempli d'une matière de remplissage et l'engagement positif étant réalisé par des connexions (9), les côtés extérieurs des disques (4) dans la zone des connexions (9) étant de plus maintenus et recouverts.

2. Roue à disque selon la revendication 1, caractérisée en ce que les connexions à engagement positif (9) sont jointées et sont par exemple conçues en échelons.

3. Roue à disque selon la revendication 1, caractérisée en ce que les côtés extérieurs des disques (4) sont en outre maintenus et recouverts dans la zone des connexions (9) par des boudins (6 et 6'), respectivement un boudin (6) et une tôle (8) respectivement un boudin (6) et un anneau profilé (10) d'un côté, et par des couronnes (7 et 7') respectivement une couronne (7) et une tôle (8), respectivement une couronne (7) et un anneau profilé (10) de l'autre côté.

4. Roue à disque selon les revendications 1 et 2, caractérisée en ce que le corps de moyeu (1) et le boudin (6') forment une seule pièce.
